# EUROPÄISCHE PATENTANMELDUNG

(11) **EP 2 332 756 A2**
(43) Veröffentlichungstag der Anmeldung: **15.06.2011**
(21) Anmeldenummer: 10194002.1
(22) Anmeldetag: 07.12.2010
(51) Int. Cl.: B60G 17/02

(54) **Vorrichtung zur Höhenverstellung eines Fahrzeugaufbaus**

(30) Priorität: 11.12.2009 DE 102009058026
(71) Anmelder: Schaeffler Technologies GmbH & Co. KG, 91074 Herzogenaurach (DE)
(72) Erfinder: Kraus, Manfred, 91074, Herzogenaurach (DE); Gerner, Armin, 96178, Pommersfelden (DE); Schmidt, Meinhard, 91126, Kammerstein (DE); Lauger, Mark, 91362, Pretzfeld (DE); Brehm, Horst, 96120, Bischberg (DE)

(57) **Zusammenfassung**

Vorrichtung zur Höhenverstellung eines Fahrzeugaufbaus umfassend ein zwischen dem Fahrzeugaufbau und einem Radträger angeordnetes Federbein mit einer zwischen einem oberen und einem unteren Federteller verspannten Feder, wobei ein Federteller oder ein den Fahrzeugaufbau aufnehmender Auflageteller über ein Stellmittel in seiner Höhe verstellbar ist, wobei das Stellmittel (6) mindestens drei um die Federlängsachse gleichmäßig verteilt angeordnete, miteinander über ein Kraftübertragungsmittel bewegungsgekoppelte Linearführungen umfasst, welche dem Auflageteller (7) oder dem Federteller, diesen jeweils linear bewegbar führend, zugeordnet sind, wobei der Antrieb der Linearführungen entweder unmittelbar oder mittelbar über wenigstens einen Motor (11) erfolgt.

## Beschreibung

### Gebiet der Erfindung

Die Erfindung betrifft eine Vorrichtung zur Höhenverstellung eines Fahrzeugaufbaus umfassend ein zwischen dem Fahrzeugaufbau und einem Radträger angeordnetes Federbein mit einer zwischen einem oberen und einem unteren Federteller verspannten Feder, wobei ein Federteller oder ein den Fahrzeugaufbau aufnehmender Auflageteller über ein Stellmittel in seiner Höhe verstellbar ist.

### Hintergrund der Erfindung

Höhenverstellvorrichtungen für Kraftfahrzeuge sind dem Stand der Technik in einer Vielzahl an Ausgestaltungen zu entnehmen und daher grundsätzlich bekannt. Insbesondere im modernen Kraftfahrzeug kann über diese Vorrichtungen beispielsweise eine Fahrwerkseinstellung entsprechend den Wünschen des Fahrers oder eine speziellen Fahrsituation erfolgen. So kann der Fahrer zum Beispiel ein sogenanntes Sport-Programm auswählen, bei welchem der Fahrzeugaufbau nach unten gesetzt wird, wodurch er die Fahrdynamik des Fahrzeugs aktiv beeinflussen kann.

Daneben kann durch eine Höhenverstellvorrichtung ein zum Beispiel durch eine hohe Beladung eines Fahrzeugs bedingtes Absinken der Karosserie, was insbesondere hinsichtlich der dadurch reduzierten Bodenfreiheit und letztlich des Fahrkomforts des Fahrzeugs nachteilig ist, ausgeglichen werden.

Konstruktiv sind diese Systeme regelmäßig so ausgelegt, dass sich ein die Höhenverstellung bewirkender Aktuator unmittelbar am Federbein befindet, was zu Problemen hinsichtlich des sehr begrenzt zur Verfügung stehenden Bauraums führen kann. Der Aktuator befindet sich dabei oftmals direkt im Radkasten und ist somit den dort herrschenden Umgebungsbedingungen ausgesetzt, was meist kostenintensive Schutzmaßnahmen zum Beispiel gegen Steinschlag oder sonstige Verschmutzungen erforderlich macht.

DE 101 44 111 A1 betrifft eine elektromechanische Niveauregulierung eines Kraftfahrzeuges mit einer zwischen einer karosserieseitigen und einer radträgerseitigen Anlagestelle gelagerten Feder, wobei die erste Anlagestelle über eine von einem Elektroantrieb, der mit einem als Spindeltrieb ausgebildeten Gewindetrieb zusammenwirkt, gegenüber der Karosserie in ihrer Höhe verstellbar ist. Hierbei ist dem Elektroantrieb eine Spindel zugeordnet, die mit einer fest an der ersten Anlagestelle angeordneten Spindelmutter kämmt. Der Elektroantrieb ist unmittelbar an der karosserieseitigen Anlagestelle angeordnet, das System baut daher in horizontaler Richtung weit auf.

### Zusammenfassung der Erfindung

Das der Erfindung zugrunde liegende Problem liegt daher darin, eine Vorrichtung zur Höhenverstellung eines Fahrzeugaufbaus anzugeben, die einfach aufgebaut und platzsparend anordbar ist.

Zur Lösung des Problems ist erfindungsgemäß eine Vorrichtung zur Höhenverstellung eines Fahrzeugaufbaus der eingangs genannten Art vorgesehen, die sich dadurch auszeichnet, dass das Stellmittel mindestens drei um die Federlängsachse gleichmäßig verteilt angeordnete, miteinander über ein Kraftübertragungsmittel bewegungsgekoppelte Linearführungen umfasst, welche dem Auflageteller oder dem Federteller, diese jeweils linear bewegbar führend, zugeordnet sind, wobei der Antrieb der Linearführungen entweder unmittelbar oder mittelbar über wenigstens einen Motor erfolgt.

Erfindungsgemäß ist es also vorgesehen, dem Stellmittel mindestens drei Linearführungen zuzuordnen, welche in um die vertikale Federachse gleichmäßig verteilter Anordnung angeordnet sind. Im Falle dreier Linearführungen sind diese folglich jeweils in einem Winkelabstand von 120° zueinander beabstandet angeordnet. Im ebenso denkbaren Falle von vier Linearführungen wäre eine um jeweils 90° um die vertikale Federachse versetzter Anordnung gegeben. Natürlich können auch mehr als vier Linearführungen vorgesehen sein, wobei diese stets in gleichmäßiger Anordnung um die vertikale Federachse positioniert sind.

Die Linearführungen sind dabei über ein Kraftübertragungsmittel bewegungsgekoppelt. Wichtig ist in diesem Zusammenhang, dass das Kraftübertragungsmittel derart wirkt, dass es eine auf dieses übertragene Kraft oder ein Drehmoment gleichzeitig und gleichmäßig auf die Linearführungen übertragen kann. Über das Kraftübertragungsmittel kann durch die Bewegungskopplung der Linearführungen auch eine auf nur eine Linearführung übertragene Kraft oder ein Drehmoment von diesem auf die übrigen Linearführungen gleichzeitig und gleichmäßig übertragen werden.

Die Linearführungen sind dem Auflageteller oder dem Federteller zugeordnet und ermöglichen eine lineare Bewegung des einen oder des anderen in vertikaler Richtung. Die lineare Bewegung des Auflage- oder Federtellers bewirkt je nachdem ein Anheben bzw. Absenken des Fahrzeugaufbaus, mithin also dessen Höhenverstellung.

Der Antrieb der Linearführungen erfolgt mittel- oder unmittelbar über wenigstens einen Motor. Unter unmittelbarem Antrieb ist dabei eine direkte Übertragung einer Kraft oder eines Drehmoments vom Motor auf die Linearführung ohne Zwischenschaltung zum Beispiel eines Getriebes oder dergleichen zu verstehen. Im Falle mehrerer Motoren ist es möglich, mehrere Linearführungen unmittelbar durch diese anzutreiben. Dabei ist über eine geeignete Steuerungselektronik sicherzustellen, dass der über mehrere Motoren erfolgende, separate Antrieb einzelner Linearführungen so wirkt, dass es je nachdem zu einer gleichmäßigen Höhenverstellung des Fahrzeugaufbaus kommt.

Im beispielhaften Falle dreier Linearführungen ist es somit möglich, eine Linearführung direkt über einen Motor anzutreiben, wobei die zweite und dritte aufgrund der Bewegungskopplung über das Kraftübertragungsmittel, wie beschrieben, ebenfalls angetrieben werden. Gegebenenfalls können auch zwei Linearführungen direkt über je einen Motor betrieben werden, wobei eine dritte, mit diesen bewegungsgekoppelte Linearführung ebenfalls angetrieben wird. Sind alle drei Linearführungen jeweils über einen eigenen diesen zugeordneten Motor direkt betrieben, kann die Bewegungskopplung im Falle eines Ausfalls eines oder zweiter Motoren die Vorrichtung, wenngleich mit Leistungseinbußen, weiter in Betrieb halten. Diese Ausführungen sind dem Prinzip nach auf Vorrichtungen mit mehr als drei Linearführungen zu übertragen.

Entsprechend ist bei einem mittelbaren Antrieb der Linearführungen zwischen Motor und der jeweiligen Linearführung das Kraftübertragungsmittel geschalten. Ein motorseitiges Abtriebselement setzt demnach an dem Kraftübertragungsmittel und nicht an einer Linearführung an. Das Kraftübertragungsmittel überträgt die Kraft auf die Linearführungen. Das Kraftübertragungsmittel kann dabei gegebenenfalls auch über mehr als einen Motor angetrieben werden.

Die Verwendung mehrerer Motoren ist grundsätzlich dann zweckdienlich, wenn die Leistung eines einzelnen Motors zu gering ist oder wenn eine besonders hohe Ausfallsicherheit der Vorrichtung gegeben werden soll.

Bevorzugt ist erfindungsgemäß vorgesehen, dass die Linearführungen entweder zwischen dem oberen Federteller und dem Auflageteller, wobei der Auflageteller relativ zum oberen Federteller bewegbar ist, angeordnet sind, oder dass die Linearführungen zwischen dem unterem Federteller und einem am Federbein lagefest angeordneten Auflageteller, wobei der untere Federteller relativ zum am Federbein lagefest angeordneten Auflageteller linear bewegbar geführt ist, angeordnet sind.

Es gibt sonach grundsätzlich zwei Möglichkeiten der Anordnung der Linearführungen. Sind die Linearführungen fahrzeugaufbauseitig, also mit anderen Worten im oberen Bereich des Federbeins, zwischen Auflageteller und oberem Federteller angeordnet, ergibt sich daraus eine axiale Bewegung des Auflagetellers relativ zum oberen Federteller, der in seiner Position unverändert bleibt.

Andererseits ist es auch möglich, die Linearführungen radträgerseitig, mit anderen Worten im unteren Bereich des Federbeins, zwischen unterem Federteller und am Federbein lagefest angeordnetem Auflageteller anzuordnen, so dass sich eine axiale Bewegung des unteren Federtellers realtiv zum am Federbein lagefest angeordneten Auflageteller ergibt, der in seiner axialen Position unverändert bleibt. Die unterschiedlichen Anordnungsmöglichkeiten der Linearführungen führen gleichermaßen zum selben Ergebnis, es ist in beiden Fällen möglich, den Fahrzeugaufbau anzuheben oder abzusenken.

In besonderen Fällen kann es auch zweckmäßig sein, sowohl zwischen Auflageteller und oberem Federteller als auch zwischen unterem Federteller und dem am Federbein lagefest angeordneten Auflageteller Stellmittel bzw. Linearführungen anzuordnen, wodurch sich in der Regel doppelt so große oder ganz allgemein größere Hübe des Fahrzeugaufbaus realisieren lassen. Zusätzlich kann derart die Ausfallsicherheit des Gesamtsystems verbessert werden.

Die Linearführungen sind in bevorzugter Ausgestaltung der Erfindung als Kugelgewindetrieb umfassend eine Spindel und eine über Kugeln auf ihr angeordneten Mutter oder als Spindel-Mutter-Antrieb ausgebildet. Diese Art der Linearführungen basieren auf demselben Funktionsprinzip, wonach ein lagefester Teil, der prinzipiell durch die mit einem Innengewinde versehene Mutter oder die mit dieser über ein Außengewinde kämmende Spindel gebildet sein kann, eine Rotation auf den entlang des lagefesten Teils beweglichen Teil überträgt, wodurch der bewegliche Teil eine entsprechende Längsbewegung ausführt. Je nach Drehrichtung der Gewinde bzw. des angelegten Drehmoments wird derart eine Auf- oder Abbewegung des beweglichen Teils erzielt. Bekanntermaßen umfasst der Kugelgewindetrieb im Gegensatz zum einfachen Spindel-Mutter-Antrieb als Wälzkörper dienende Kugeln, welche zwischen Spindel und Mutter wälzen.

In Weiterbildung der Erfindung ist es möglich, dass der Antrieb des Kugelgewindetriebs oder des Spindel-Mutter-Antriebs jeweils über eine Mutter, wobei die Spindel mit dem Auflageteller oder dem unteren Federteller entlang der angetriebenen Mutter bewegbar ist oder die angetriebene Mutter mit dem Auflageteller oder dem unteren Federteller entlang der Spindel bewegbar ist, erfolgt. Alternativ kann der Antrieb über eine Spindel, wobei die Mutter mit dem Auflageteller oder dem unteren Federteller entlang der angetriebenen Spindel bewegbar ist oder die angetriebene Spindel mit dem Auflageteller oder dem unteren Federteller entlang der Mutter bewegbar ist, erfolgen. Es ist also für eine geeignete stabile Verbindung zwischen Spindel oder Mutter und Auflageteller bzw. unterem Federteller zu sorgen, welche insbesondere den beim Betrieb der Vorrichtung auftretenden Beanspruchungen Stand hält. Es kommen sämtliche Verbindungstechniken in Frage, lediglich beispielhaft und nicht abschließend sind Niet-, Press- oder Schweißverbindungen genannt.

Das Kraftübertragungsmittel ist vorteilhaft als ein die antreibbaren Muttern oder die antreibbaren Spindeln umschlingendes, mit diesen kämmendes Umschlingungsmittel oder als ein gleichzeitig mit allen antreibbaren Muttern oder allen antreibbaren Spindeln kämmendes Zahnradelement ausgebildet. Das als Umschlingungsmittel ausgebildete Kraftübertragungsmittel umgreift somit die Linearführungen an den antreibbaren Muttern respektive Spindeln, woraus sich die eingangs genannte Bewegungskopplung dieser ergibt. Daneben ist das Umschlingungsmittel derart ausgebildet, dass es mit den antreibbaren Muttern respektive Spindeln kämmt. Derart ist durch einen rotierenden Antrieb des Umschlingungsmittels ein Antrieb dieser Komponenten möglich, wonach sich gemäß den obigen Ausführungen über die derart betätigten Kugelgewindetriebe oder Spindel-Mutter-Antriebe eine Höhenverstellung des Fahrzeugaufbaus ergibt. Hierzu können an den antreibbaren Muttern bzw. Spindeln gegebenenfalls geeignete Betätigungsabschnitte vorgesehen sein. Auch am Umschlingungsmittel können Betätigungsabschnitte vorgesehen sein, die, um mit den antreibbaren Muttern oder Spindeln zu kämmen, mit diesen oder den an diesen angeordneten Betätigungsabschnitten in Eingriff stehen. Besonders bevorzugt ist das Umschlingungsmittel demnach als Riemen, insbesondere Zahnriemen, oder Kette ausgebildet. Ein Riemen hat dabei im Gegensatz zur Kette den Vorteil eines reduzierten Geräuschpegels im Betrieb, er überträgt kaum Stellgeräusche des Stellmittels in die Fahrgastzelle.

Alternativ kann das Kraftübertragungsmittel wie erwähnt, auch als ein gleichzeitig mit allen antreibbaren Muttern oder allen antreibbaren Spindeln kämmendes Zahnradelement ausgebildet sein. Das Zahnradelement greift somit über seine Außenkontur in eine dazu korrespondierende Außenkontur der antreibbaren Muttern oder Spindeln ein, so dass sich eine einem Planetengetriebe ähnliche Anordnung ergibt. Hierbei stellt das Zahnradelement sinngemäß das Sonnenrad und die antreibbaren Muttern bzw. Spindeln die Planetenräder dar. Wesentlich ist, dass das Zahnradelement gleichzeitig mit allen antreibbaren Muttern oder Spindeln kämmt, mithin also eine gleichmäßige, synchrone Bewegung auf diese übertragen kann.

In bevorzugter Ausführung der Erfindung ist es vorgesehen, dass ein motorseitiges Abtriebselement eine rotierende Bewegung auf das die antreibbaren Muttern oder Spindeln umschlingende Umschlingungsmittel überträgt. Eine direkte Verbindung zwischen Motor bzw. dem diese zugehörigen Abtriebselement und den Linearführungen ist also nicht gegeben. Der Antrieb der Linearführungen erfolgt dadurch, dass das Umschlingungsmittel über das motorseitige Abtriebselement in Rotation versetzt wird, wobei es diese aufgrund der Umschlingung der bzw. dem Kämmen mit den antreibbaren Muttern oder Spindeln nach den obigen Ausführungen überträgt. Hieraus ergibt sich insgesamt eine Höhenverstellung des Fahrzeugaufbaus.

Alternativ dazu ist es möglich, dass ein motorseitiges Abtriebselement mit wenigstens einer antreibbaren Mutter oder wenigstens einer antreibbaren Spindel kämmt. Somit wird nur eine oder nur ein Teil der Linearführungen direkt motorisch angetrieben, wobei sich ein Antrieb der anderen, nicht direkt über den Motor angetriebenen Linearführungen durch die Bewegungskopplung über das Kraftübertragungsmittel ergibt. Es macht dabei grundsätzlich keinen Unterschied, ob das Kraftübertragungsmittel hierbei als Umschlingungsmittel oder als Zahnradelement ausgebildet ist.

Alternativ ist es auch möglich, dass ein motorseitiges Abtriebsritzel in der Federlängsachse angeordnet ist und mit dem Zahnradelement kämmt. Diese Variante ermöglicht einen zentralen Antrieb, der einem Planetengetriebe sehr ähnlich ist, da das mit dem motorseitigen Abtriebselement verbundene Zahnradelement gleichzeitig mit den antreibbaren Muttern oder Spindeln kämmt und insofern ein Drehmoment des Motors entsprechend auf diese überträgt, wodurch sich im Weiteren der Fahrzeugaufbau anheben oder absenken lässt.

Durch unterschiedliche Ausführungen der miteinander kämmenden Komponenten (Umschlingungsmittel, Zahnradelement, antreibbare Muttern oder Spindeln) ist eine Vielzahl an Übersetzungen einstellbar.

Das motorseitige Abtriebselement kann erfindungsgemäß vorteilhaft als flexible Welle ausgebildet sein. Daraus ergibt sich, dass der Motor in räumlicher Trennung zu dem Stellmittel bzw. dem Federbein angeordnet werden kann, wodurch dem Problem des eingangs erwähnten Platzmangels noch besser gerecht werden kann. Eine Übertragung von Kräften bzw. Drehmomenten ist über das flexible Abtriebselement sichergestellt. Ferner ist es derart denkbar, dass die Vorrichtung an eine räumlich getrennte Motoreinheit des Fahrzeugs ankuppelbar ist, die gleichermaßen auch andere Fahrzeugkomponenten antreibt, so dass ein der Vorrichtung zur Höhenverstellung eines Fahrzeugaufbaus zugedachter eigener Motor entfallen kann. Eine geeignete Steuerungseinrichtung wäre in diesem Fall notwendig, um die einzelnen von der Motoreinrichtung betriebenen Komponenten mit dieser zu koppeln bzw. von dieser zu entkoppeln.

In besonders vorteilhafter Weiterbildung der Erfindung kämmt das motorseitige Abtriebselement über ein zwischengeschaltetes Umlenkgetriebe mit dem Umschlingungsmittel oder wenigstens einer antreibbaren Mutter oder wenigstens einer antreibbaren Spindel. Durch Zwischenschalten des Umlenkgetriebes ist es möglich, dass das motorseitige Abtriebselement in einer nahezu beliebigen winkligen Lage zum Umschlingungsmittel oder einer antreibbaren Mutter bzw. Spindel stehen kann. Der Winkel zwischen Motorachse und der Achse der Linearführung ist sonach beliebig variierbar. Durch die Verwendung des Umlenkgetriebes ist ein noch höherer Freiheitsgrad bezüglich der Anordnung des Motors bzw. der motorseitigen Abtriebswelle gegeben. Das Umlenkgetriebe umfasst dabei einen mit dem Umschlingungsmittel oder der antreibbaren Mutter bzw. Spindel zusammenwirkenden Betätigungsabschnitt. Besonders bevorzugt ist das Umlenkgetriebe als Kegelrad- oder Kronengetriebe ausgebildet, wobei natürlich auch andere gleichwirkende Getriebearten ebenfalls in Frage kommen.

Es ist von Vorteil, wenn die Linearführungen jeweils wenigstens ein Sperrmittel umfassen. Das Sperrmittel führt z. B. dazu, dass die Fahrwerksbelastung nicht direkt über die Linearführungen in das Kraftübertragungsmittel geleitet wird. Es kann gewährleistet werden, dass eine Höhenverstellung bei ausgeschaltetem Motor nicht möglich ist, da die Sperrmittel dies verhindern. Ein Sperrmittel kann dabei beispielsweise als Schlingfedersperre oder Rollenfreilauf ausgebildet sein. So ist es möglich, z. B. den Rollenfreilauf nur bei eingeschaltetem Motor freizuschalten und somit eine für die Höhenverstellung erforderliche Rotation eines Teils des Kugelgewindetriebs erst dann zuzulassen.

In einer weiteren vorteilhaften Weiterbildung der Erfindung ist es vorgesehen, dass dem Motor ein Übersetzungsgetriebe zugeordnet ist. Durch die Verwendung eines Übersetzungsgetriebes kann beispielsweise die Bewegung des Stellmittels beschleunigt werden und somit die Höhenverstellung des Fahrzeugaufbaus insgesamt schneller erfolgen. Gleichermaßen kann über ein Übersetzungsgetriebe gegebenenfalls auch eine Feinjustierung der Höhenverstellung ermöglicht oder verbessert werden.

Bezüglich des Motors ist es bevorzugt, dass es sich dabei um einen Elektromotor handelt. Selbstverständlich sind aber auch andere Motorarten einsetzbar.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Prinzipdarstellung einer erfindungsgemäßen Vorrichtung zur Höhenverstellung eines Fahrzeugaufbaus;
- Figur 2: eine teilweise quer geschnittene Prinzipdarstellung einer erfindungsgemäßen Vorrichtung zur Höhenverstellung eines Fahrzeugaufbaus;
- Figur 3: eine vergrößerte Ansicht des in Figur 2 eingekreisten Bereichs;
- Figur 4: eine Prinzipdarstellung einer erfindungsgemäßen Vorrichtung zur Höhenverstellung eines Fahrzeugaufbaus einer bevorzugten erfindungsgemäßen Ausführungsform;
- Figur 5: einen Querschnitt durch eine Seitenansicht einer erfindungsgemäßen Vorrichtung zur Höhenverstellung eines Fahrzeugaufbaus gemäß der erfindungsgemäßen bevorzugten Ausführungsform nach Figur 4 in einer ersten Höhenlage;
- Figur 6: einen Querschnitt durch eine Seitenansicht einer erfindungsgemäßen Vorrichtung zur Höhenverstellung eines Fahrzeugaufbaus gemäß der erfindungsgemäßen bevorzugten Ausführungsform nach Figur 4 in einer zweiten Höhelage und
- Figur 7: eine Prinzipdarstellung einer weiteren bevorzugten erfindungsgemäßen Ausführungsform.

### Ausführliche Beschreibung der Zeichnung

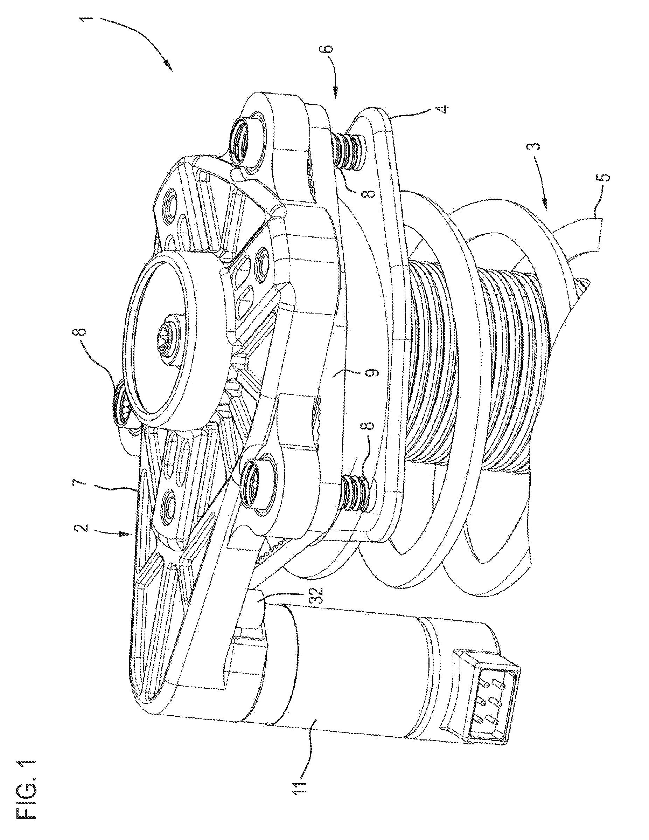

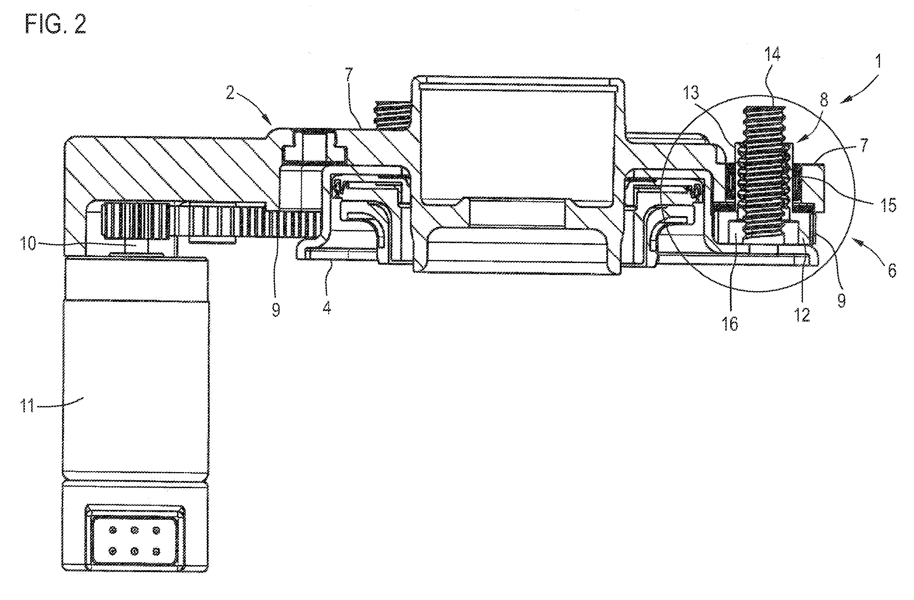

In Figur 1 ist eine Prinzipdarstellung einer erfindungsgemäßen Vorrichtung 1 zur Höhenverstellung eines Fahrzeugaufbaus 2 gezeigt. Ein Federbein 3 ist zwischen dem Fahrzeugaufbau 2 und einem nicht dargestellten Radträger angeordnet und umfasst eine zwischen einem oberen Federteller 4 und einem nicht gezeigten unteren Federteller verspannte Feder 5. Über ein dem Auflageteller 7 zugeordnetes Stellmittel 6 ist der den Fahrzeugaufbau 2 aufnehmende Auflageteller 7 und somit insgesamt der Fahrzeugaufbau 2 in seiner Höhe, d. h. vertikalen Position, verstellbar. Das Stellmittel 6 umfasst drei Linearführungen in Gestalt von Kugelgewindetrieben 8, welche zwischen dem auch als Domlager zu bezeichnenden Auflageteller 7 und dem oberen Federteller 4 in einem Winkel von 120° um die Federachse gleichmäßig verteilt angeordnet sind. Die Kugelgewindetriebe 8 sind von einem Kraftübertragungsmittel in Form eines Zahnriemens 9 umschlungen, woraus sich eine Bewegungskopplung der Triebe ergibt. Der Zahnriemen 9 kämmt mit einer Abtriebswelle in Form eines Zahnrads 10 (Figur 2) eines elektrisch betriebenen Motors 11. Der Motor 11 umfasst dabei nicht näher bezeichnete Sperrmittel, ferner ist ihm eine Steuerungseinrichtung sowie ein Übersetzungsgetriebe (beide nicht näher dargestellt) zugeordnet. Es ist ersichtlich, dass der Motor 11 fest mit dem Auflageteller 7 verbunden ist, so dass dieser bei einer Höhenverstellung des Fahrzeugaufbaus 2 ebenfalls entsprechend mitbewegt wird. Mit 32 ist eine Umlenkung bezeichnet, die den Zahnriemen 9 umlenkt bzw. strafft.

Aus Figur 2 ist ersichtlich, dass einem Kugelgewindetrieb 8 jeweils Muttern 13 und Spindeln 14 zugeordnet sind, zwischen welchen wälzkörperartige Kugeln 15 wälzen. An den im Wesentlichen hohlzylindrischen Muttern 13 ist an ihrem federtellerseitigen Ende ein im Vergleich zu den Muttern 13 in seinem Durchmesser vergrößerter Ring ausgebildet, der als Betätigungsabschnitt 12 dienend mit dem Riemen 9 kämmt. Nicht gezeigt ist jeweils ein dem Kugelgewindetrieb 8 zugehöriger Rückführkanal in den Muttern 13, der das Zirkulieren der Kugeln 15 gewährleistet.

Aus Figur 2 ist ferner ersichtlich, dass im Betrieb des Motors 11 das Zahnrad 10 über den Zahnriemen 9 eine rotierende Bewegung auf die Betätigungsabschnitte 12 der mit dem Auflageteller 7 verbundenen Muttern 13 überträgt. Wie erwähnt, kämmen hierzu Zahnriemen 9 und die jeweiligen Betätigungsabschnitte 12 miteinander. Die Rotation der Muttern 13 bewirkt eine Bewegung des Auflagetellers 7 entlang der lagefesten und hier nicht rotierenden Spindeln 14.

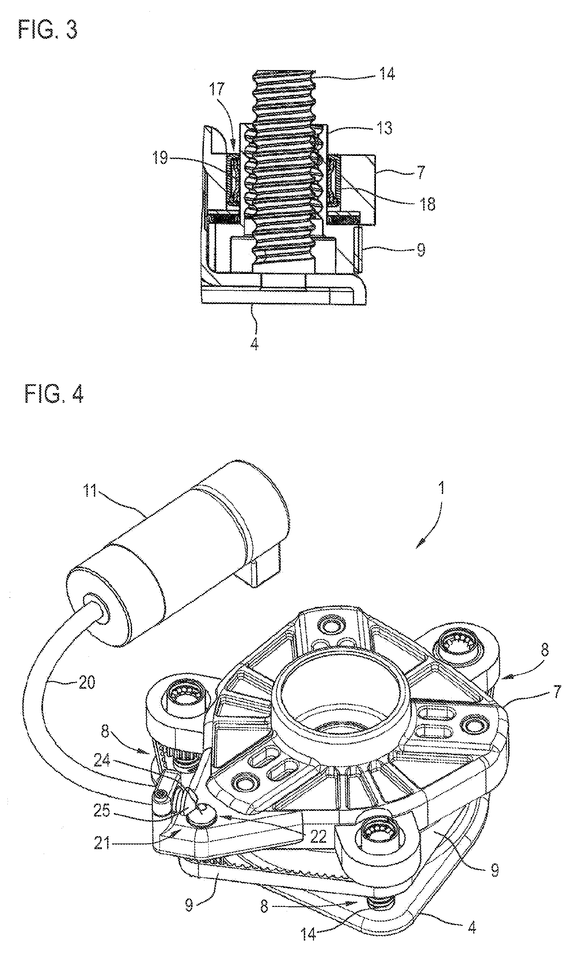

In Figur 3, die eine vergrößerte Ansicht des in Figur 2 eingekreisten Bereichs zeigt, ist die Integration eines Sperrmittels in die Vorrichtung 1 dargestellt. Innerhalb der die Mutter 13 aufnehmenden Aussparung 17 des Auflagetellers 7 ist zwischen der Außenwandung der Mutter 13 und der Innenwandung der Aussparung 17 ein Radiallager 18 angeordnet. In dem Radiallager 18 befindet sich eine Sperrfeder 19, die sich bei Rotation der Mutter 13 um die Außenwandung der Mutter 13 windet und gleichzeitig verdrillt. Durch die Verdrillung der Sperrfeder 19 wird eine Kraft auf die Mutter 13 ausgeübt, die deren Rotation im Sinne einer Reibungskraft hemmt. Über eine hier nicht gezeigte Steuereinrichtung kann die Sperrfeder 19 gelöst werden und die Mutter 13 ist wieder drehbar.

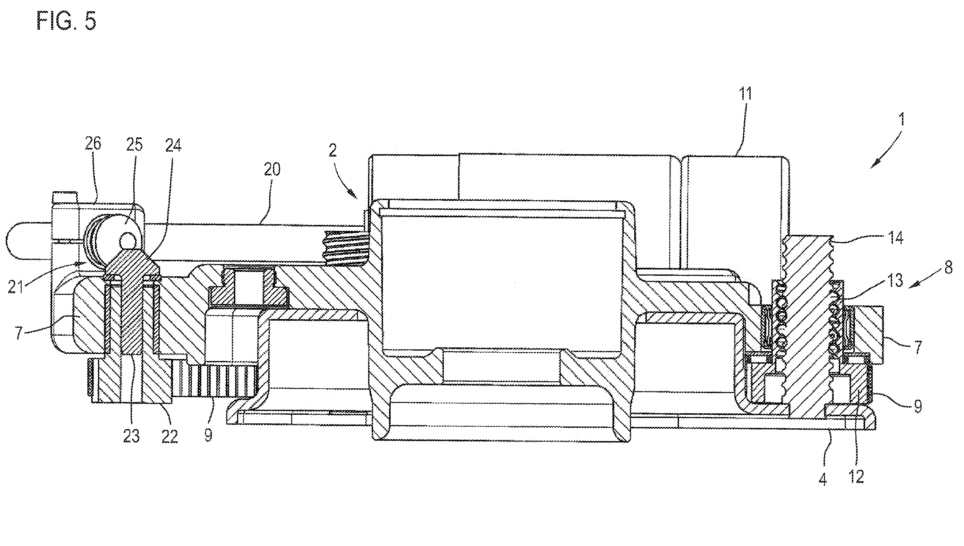

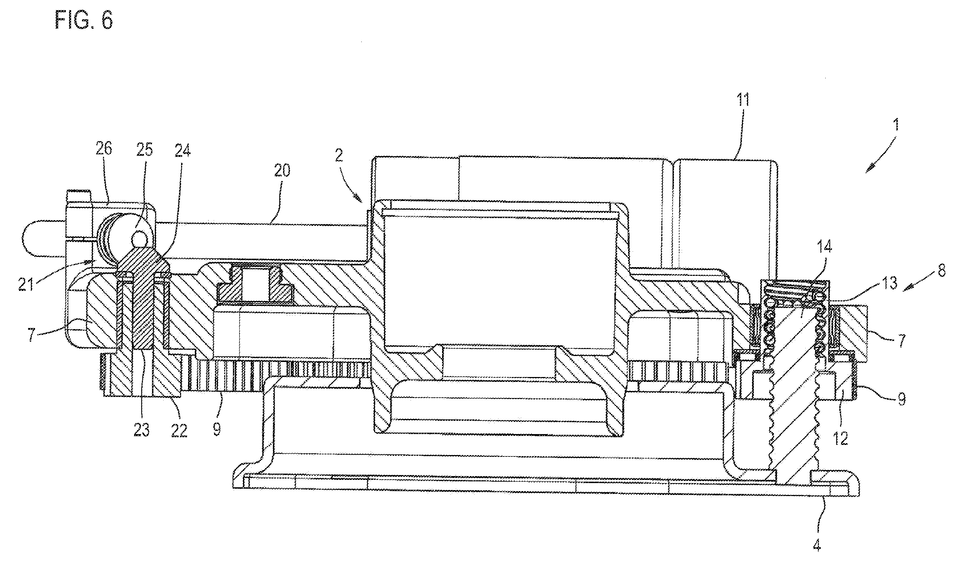

Figur 4 zeigt eine Prinzipdarstellung einer erfindungsgemäßen Vorrichtung 1 zur Höhenverstellung eines Fahrzeugaufbaus 2 in einer erfindungsgemäßen bevorzugten Ausführungsform. Wesentlicher Unterschied ist dabei die Verwendung einer flexiblen Welle 20 als Abtriebselement des Motors 11, durch welche sich eine räumlich getrennte Anordnung des Motors 11 zum Federbein 3 ergeben kann. Die flexible Welle 20 ist an ihrem auflagetellerseitigen Ende mit einem Umlenkgetriebe in Form eines Kegelradgetriebes 21 verbunden. Das Kegelradgetriebe 21 verbindet die hier um 90° zueinander versetzte Motorachse bzw. Achse der flexiblen Welle 20 mit der Achse eines den Riemen 9 antreibenden Zahnradelements 22. In dem Zahnradelement 22, welches hohlzylindrisch ausgeführt ist, befindet sich ein drehfest angeordneter Zapfen 23 mit einem einstückig ausgebildeten Antriebsritzel 24 (vgl. Figur 5, 6). Das Antriebsritzel 24 kämmt mit einem wellenseitigen Abtriebsritzel 25. Sonach bilden die Ritzel 24, 25 im Wesentlichen das Kegelradgetriebe 21 aus. Durch die um 90° zueinander versetzte Anordnung von Motorachse zu Zahnradachse sind die Ritzel 24, 25 jeweils um 45°abgekantet, wobei natürlich grundsätzlich andere Winkel denkbar sind. Die flexible Welle 20 ist über ein Befestigungsmittel 26 lösbar am Auflageteller 7 befestigt.

Anhand der Figuren 5 und 6 wird noch einmal das Funktionsprinzip der erfindungsgemäßen Vorrichtung 1 zur Höhenverstellung des Fahrzeugaufbaus 2 erläutert. Dazu zeigen die Figuren 5 und 6 je einen Querschnitt durch eine Seitenansicht einer erfindungsgemäßen Vorrichtung 1 zur Höhenverstellung eines Fahrzeugaufbaus 2 gemäß der erfindungsgemäßen Ausführungsform nach Figur 4 in einer ersten Höhenlage (Figur 5) und einer zweiten Höhenlage (Figur 6). Unter erster Höhenlage ist die Tiefstellung des Fahrzeugaufbaus 2 und unter zweiter Höhenlage die Hochstellung des Fahrzeugaufbaus 2 zu verstehen.

Ausgehend von Figur 5, also der Tiefstellung des Fahrzeugaufbaus 2, erfolgt die Höhenverstellung des Fahrzeugaufbaus 2 derart, dass über den Antrieb des Motors 11 ein Drehmoment auf die flexible Welle 20 übertragen wird. Über das Kegelradgetriebe 21 überträgt sich dieses mittels der in Wirkverbindung stehenden Ritzel 24, 25 auf den drehfest innerhalb des Zahnradelements 22 angeordneten Zapfen 23 und führt so zu einer Rotation des Zahnradelements 22. Das Zahnradelement 22 ist von dem Riemen 9 umschlungen und kämmt mit ihm, wodurch der Riemen 9 ebenfalls in Rotation versetzt wird. Der Riemen 9 umschlingt die an den Muttern 13 befindlichen Betätigungsabschnitte 12 und kämmt auch mit diesen, wodurch sich also letztlich das Drehmoment des Motors 11 über die genannten Bauteile auf die Muttern 13 überträgt. Durch Rotation der Muttern 13 wandern diese entlang der Spindeln 14 und heben den Auflageteller 7 sowie den Fahrzeugaufbau 2 an. Hierbei bewegen sich folglich auch weitere am oder im Auflageteller 7 angeordnete Bauteile, wie z. B. das Zahnradelement 22 samt Riemen 9 sowie Zapfen 23, das Kegelradgetriebe 21 sowie das Befestigungsmittel 26. Mit anderen Worten wird also die Riemenebene ebenfalls vertikal versetzt. Die Spindeln 14 sind dabei lagefest am oberen Federteller 4 angeordnet und drehen sich nicht.

Fig. 6 zeigt den angehobenen Zustand des Fahrzeugaufbaus 2 nach erfolgter Höhenverstellung durch die Vorrichtung 1. Ersichtlich blieb der obere Federteller 4 lagefest und der Auflageteller 7 wurde durch die Kugelgewindetriebe 8 relativ zu diesem bewegt. Durch Anlegen eines entgegengesetzten Drehmoments kann das Anheben des Fahrzeugaufbaus 2 rückgängig gemacht werden, er lässt sich also absenken. Daneben sind natürlich sämtliche Zwischenlagen ebenso einstellbar, d. h., es handelt sich insgesamt um eine stufenlose Höhenverstellbarkeit des Fahrzeugaufbaus 2 durch die Vorrichtung 1.

Alternativ dazu wäre es gleichermaßen möglich, die jeweiligen Spindeln 14 drehbar zu lagern und über eine geeignete Verbindung mit dem Motor 11 anzutreiben. Hieraus ergäbe sich, dass die Spindeln 14 in Rotation versetzt würden und die mit dem Auflageteller 7 verbundenen Muttern 13, die hier nun nicht rotieren, entlang der rotierenden Spindeln 14 entsprechend des angelegten Drehmoments nach oben bzw. unten wanderten, was ebenso zu einer Höhenverstellung des Fahrzeugaufbaus 2 führte. Hierbei verfügten nun die Spindeln 14 über entsprechende Betätigungsabschnitte mit denen der Riemen 9 kämmt. Wiederum bliebe derart der obere Federteller 4 lagefest und es käme ausschließlich zu einer Vertikalbewegung des Auflagetellers 7 relativ zum oberen Federteller 4.

Auch eine um 180° gedreht Anordnung, wobei die Muttern 13 dem oberen Federteller 4 und die Spindeln 14 dem Auflageteller 7 zugeordnet sind, ist denkbar. Gleichermaßen könnte der Antrieb dabei über die Muttern 13 erfolgen, wobei sich die nicht rotierenden Spindeln mit dem Auflageteller 7 entlang diesen bewegten oder der Antrieb über die Spindel 14 erfolgen, welche entlang der nicht rotierenden Muttern 13 mit dem Auflageteller 7 vertikal bewegbar wären.

Alternativ dazu wäre auch eine direkte Kopplung des Motors 11 mit einem Kugelgewindetrieb 8 denkbar. Der Motor 11 würde somit nicht den Riemen 9 sondern über die flexible Welle 20 direkt die antreibbaren Spindeln 14 oder Muttern 13 antreiben, d. h. in Rotation versetzen, woraus sich über die Bewegungskopplung durch den Riemen 9 der Kugelgewindetriebe 8 miteinander entsprechend ein Wandern der nicht drehenden Muttern 13 bzw. Spindeln 14 mit dem Auflageteller 7 entlang der angetriebenen Spindeln 14 bzw. Muttern 13 ergäbe und derart die Höhenverstellung des Fahrzeugaufbaus 2 erfolgte. Grundsätzlich könnte auch ein zweiter Motor zweckmäßig sein, wenn die Leistung des Motors 11 nicht ausreichen oder die Ausfallsicherheit der Vorrichtung 1 verbessert werden sollte. Der zweite Motor wäre in dieser Alternative beispielsweise mit einer zweiten drehbaren Spindel gekoppelt.

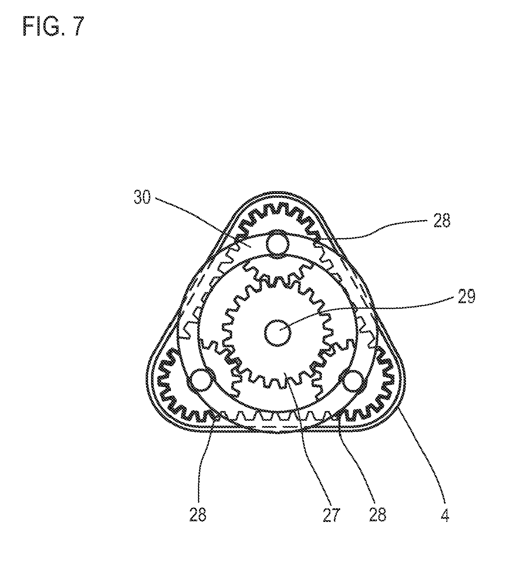

Figur 7 zeigt eine Prinzipdarstellung einer weiteren erfindungsgemäßen Ausführungsform in Form einer Aufsicht. Mit 27 ist ein Zahnradelement 27 beschrieben, welches mit den Betätigungsabschnitten 28, welche beispielsweise drehbaren Spindeln zugehörig sind, kämmt und inmitten der Betätigungsabschnitte 28 angeordnet ist. Ein nicht gezeigter innerhalb des Federbeins 3 angeordneter Motor treibt über ein in der Federlängsachse angeordnetes Abtriebsritzel 29 das Zahnradelement 27 rotierend an. Durch die Rotation des Zahnradelements 27 kommt es aufgrund des Kämmens mit den Betätigungsabschnitten 28 ebenso zu einer Rotation dieser und somit auch der Spindeln. Die Rotation der Spindeln bedingt eine vertikale Bewegung, je nach Drehmoment also eine Bewegung aus der Bildebene heraus oder in die Bildebene hinein, der im Auflageteller, der hier schematisch als Ring 30 angedeutet ist, lagefest und nicht drehbar angeordneten Muttern. So ergibt sich eine Relativbewegung des Auflagetellers bzw. des Rings 30 zum sich nicht bewegenden oberen Federteller 4 und somit eine Höhenverstellung des Fahrzeugaufbaus. Motor- und Dämpferachse sind in dieser Erfindungsalternative gleich, weshalb diese als besonders platzsparend zu erachten ist.

Die vorweg genannten unterschiedlichen Mutter-Spindel-Anordnungen sind auch gemäß dieser erfindungsgemäßen Ausführungsform denkbar.

Auch wenn es nicht gezeigt ist, kann es ebenso erfindungsgemäß vorgesehen sein, dass das Stellmittel 6 zwischen dem unteren Federteller und einem am Federbein 3 lagefest angeordneten Auflageteller 7 vorgesehen ist.

Es ist offensichtlich, dass sich durch die erfindungsgemäße Anordnung und insbesondere das Zusammenwirken einer Vielzahl an Komponenten durch Variation deren Ausführung verschiedenste Übersetzungen einstellen lassen.

### Bezugszahlenliste

- 1: Vorrichtung
- 2: Fahrzeugaufbau
- 3: Federbein
- 4: Federteller
- 5: Feder
- 6: Stellmittel
- 7: Auflageteller
- 8: Kugelgewindetrieb
- 9: Zahnriemen
- 10: Zahnrad
- 11: Motor
- 12: Umlenkung
- 13: Mutter
- 14: Spindel
- 15: Kugel
- 16: Halteelement
- 17: Aussparung
- 18: Radiallager
- 19: Sperrfeder
- 20: Welle
- 21: Kegelradgetriebe
- 22: Zahnradelement
- 23: Zapfen
- 24: Antriebsritzel
- 25: Abtriebsritzel
- 26: Befestigungsmittel
- 27: Zahnradelement
- 28: Betätigungsabschnitt
- 29: Abtriebsritzel
- 30: Ring

## Patentansprüche

1. Vorrichtung zur Höhenverstellung eines Fahrzeugaufbaus umfassend ein zwischen dem Fahrzeugaufbau und einem Radträger angeordnetes Federbein mit einer zwischen einem oberen und einem unteren Federteller verspannten Feder, wobei ein Federteller oder ein den Fahrzeugaufbau aufnehmender Auflageteller über ein Stellmittel in seiner Höhe verstellbar ist, **dadurch gekennzeichnet, dass** das Stellmittel (6) mindestens drei um die Federlängsachse gleichmäßig verteilt angeordnete, miteinander über ein Kraftübertragungsmittel bewegungsgekoppelte Linearführungen umfasst, welche dem Auflageteller (7) oder dem Federteller, diesen jeweils linear bewegbar führend, zugeordnet sind, wobei der Antrieb der Linearführungen entweder unmittelbar oder mittelbar über wenigstens einen Motor (11) erfolgt.

2. Vorrichtung nach Anspruch 1, **dadurch gekennzeichnet, dass** die Linearführungen entweder zwischen dem oberen Federteller (4) und dem Auflageteller (7), wobei der Auflageteller (7) relativ zum oberen Federteller (4) bewegbar ist, angeordnet sind, oder dass die Linearführungen zwischen dem unteren Federteller und einem am Federbein (3) lagefest angeordneten Auflageteller, wobei der untere Federteller relativ zum am Federbein (3) lagefest angeordneten Auflageteller linear bewegbar geführt ist, angeordnet sind.

3. Vorrichtung nach Anspruch 1 oder 2, **dadurch gekennzeichnet, dass** die Linearführungen als Kugelgewindetrieb (8) umfassend eine Spindel (14) und einen über Kugeln (15) auf ihr gelagerten Mutter (13) oder als Spindel-Mutter-Antrieb ausgebildet sind.

4. Vorrichtung nach Anspruch 3, **dadurch gekennzeichnet, dass** der Antrieb jeweils über eine Mutter (13), wobei die Spindel (14) mit dem Auflageteller (7) oder dem unteren Federteller entlang der angetriebenen Mutter (13) bewegbar ist oder die angetriebene Mutter (13) mit dem Auflageteller (7) oder dem unteren Federteller entlang der Spindel (14) bewegbar ist, oder der Antrieb über eine Spindel (14), wobei die Mutter (13) mit dem Auflageteller (7) oder dem unteren Federteller entlang der angetriebenen Spindel (14) bewegbar ist, oder die angetriebene Spindel (14) mit dem Auflageteller (7) oder dem unteren Federteller entlang der Mutter (13) bewegbar ist, erfolgt.

5. Vorrichtung nach Anspruch 3 oder 4, **dadurch gekennzeichnet, dass** das Kraftübertragungsmittel als ein die antreibbaren Muttern (13) oder die antreibbaren Spindeln (14) umschlingendes, mit diesen kämmendes Umschlingungsmittel, insbesondere Riemen (9) oder Kette, oder als ein gleichzeitig mit allen antreibbaren Muttern (13) oder allen antreibbaren Spindeln (14) kämmendes Zahnradelement (27) ausgebildet ist.

6. Vorrichtung nach einem der Ansprüche 3 bis 5, **dadurch gekennzeichnet, dass** ein beispielsweise als flexible Welle (20) ausgebildetes motorseitiges Abtriebselement eine rotierende Bewegung auf das die antreibbaren Muttern (13) oder antreibbaren Spindeln (14) umschlingende Umschlingungsmittel überträgt.

7. Vorrichtung nach einem der Ansprüche 3 bis 5, **dadurch gekennzeichnet, dass** ein motorseitiges Abtriebselement mit wenigstens einer antreibbaren Mutter (13) oder wenigstens einer antreibbaren Spindel (14) kämmt.

8. Vorrichtung nach einem der Ansprüche 3 bis 5, **dadurch gekennzeichnet, dass** ein motorseitiges Abtriebsritzel (29) in der Federlängsachse angeordnet ist und mit dem Zahnradelement (27) kämmt.

9. Vorrichtung nach einem der Ansprüche 5 bis 8, **dadurch gekennzeichnet, dass** das motorseitige Abtriebselement über ein zwischengeschaltetes Umlenkgetriebe, insbesondere Kegelrad- (21) oder Kronengetriebe, mit dem Umschlingungsmittel oder wenigstens einer antreibbaren Mutter (13) oder wenigstens einer antreibbaren Spindel (14) kämmt.

10. Vorrichtung nach einem der vorangehenden Ansprüche, **dadurch gekennzeichnet, dass** die Linearführungen jeweils wenigstens ein Sperrmittel, insbesondere eine Schlingfedersperre oder ein Rollenfreilauf, umfassen.
